# EUROPÄISCHE PATENTSCHRIFT

(11) **EP 3 825 495 B1**
(45) Veröffentlichungstag und Bekanntmachung des Hinweises auf die Patenterteilung: **18.01.2023**
(21) Anmeldenummer: 20206906.8
(22) Anmeldetag: 11.11.2020
(51) Int. Cl.: E04H 12/08, E04H 12/24, G09F 13/00, H01Q 1/12, F21S 8/08, F21V 21/116, F21V 21/34, G08G 1/095, E01F 9/65, G09F 7/18, G09F 7/20

(54) **TRAGWERK-SYSTEM UND VERBINDUNGSKNOTEN ZUM BEFESTIGEN VON FUNKTIONSMODULEN AN EINEM TRAGWERK DES TRAGWERK-SYSTEMS**
SUPPORTING SYSTEM AND CONNECTING NODE FOR ATTACHING FUNCTIONAL MODULES TO A SUPPORTING FRAMEWORK OF THE SUPPORTING SYSTEM
SYSTÈME D'OSSATURE PORTEUSE ET NOEUDS DE RACCORDEMENT PERMETTANT DE FIXER DES MODULES FONCTIONNELS À UNE OSSATURE PORTEUSE DU SYSTÈME D'OSSATURE PORTEUSE

(30) Priorität: 19.11.2019 AT 510012019
(43) Veröffentlichungstag der Anmeldung: 26.05.2021
(73) Patentinhaber: Fonatsch GmbH, 3390 Melk (AT)
(72) Erfinder: Meissner, Alexander, 3390 Melk (AT)
(74) Vertreter: Patentanwaltskanzlei Matschnig & Forsthuber OG

(56) Entgegenhaltungen:
- WO-A1-2005/093161
- GB-A- 2 519 562
- KR-Y1- 200 442 603
- US-A1- 2004 261 334

## Beschreibung

Die Erfindung betrifft einen Verbindungsknoten zur Befestigung, insbesondere zur lösbaren Befestigung, eines oder mehrerer Funktionsmodule an einem Tragwerk, wobei das Tragwerk im Wesentlichen in vertikaler Richtung verlaufend ausgebildet ist, beispielsweise in Form eines stehenden Mastes, und wobei an zumindest einer Außenseite des Tragwerkes eine vertikal verlaufende Nut vorgesehen ist, wobei der Verbindungsknoten aus zwei KnotenSchalen, einer ersten Knoten-Schale und einer zweiten Knoten-Schale gebildet ist oder zwei Knoten-Schalen, eine erste Knoten-Schale und eine zweite Knoten-Schale umfasst, welche an dem Tragwerk, insbesondere dieses von zwei Seiten umgreifend, angebracht werden können.

Weiters betrifft die Erfindung ein Tragwerk-System, insbesondere ein modular erweiterbares Tragwerk-System, mit einem Tragwerk, beispielsweise aus Stahl oder Aluminium, wobei das Tragwerk im Wesentlichen in vertikaler Richtung verläuft, und beispielsweise in Form eines stehenden Mastes ausgebildet ist, wobei an zumindest einer Außenseite des Tragwerkes eine vertikal verlaufende Nut vorgesehen ist, und wobei an dem Tragwerk ein oder mehrere Funktions-Module befestigbar oder befestigt sind.

Tragwerke, insbesondere in Form von Masten, sind aus dem Stand der Technik bekannt und dienen z.B. als Träger von Straßenbeleuchtungen, Signalanlagen, Verkehrszeichen, etc. Üblicherweise werden an diesen Tragwerken die entsprechenden "Anwendungen", etwa die angesprochenen Straßenbeleuchtungen, Signalanlagen, Verkehrszeichen, etc. mittels fixer Aufnahmen montiert.

Die KR 200442603 Y1 zeigt einen Verbindungsknoten zur Befestigung, insbesondere zur lösbaren Befestigung eines oder mehrerer Funktionsmodule an einem Tragwerk, wobei das Tragwerk im Wesentlichen in vertikaler Richtung verlaufend ausgebildet ist, beispielsweise in Form eines stehenden Mastes, und wobei an zumindest einer Außenseite des Tragwerkes eine vertikal verlaufende Nut vorgesehen ist.

Dokument US 2004261334 A1 zeigt einen Verbindungsknoten aus zwei Knotenschalen, welche an einem Tragwerk angebracht werden können, wobei an der Knotenschale ein Nutenstein sowie die zugeordnete Befestigungsmutter angeordnet sind.

Dokument US 2012175479 A1 zeigt einen an einem Ausleger befestigten Verbindungsknoten, wobei sich an der Außenseite des Auslegers eine vertikal verlaufende Nut befindet.

Im Folgenden werden "Anwendungen", wie etwa Straßenbeleuchtungen, Signalanlagen, Verkehrszeichen, etc., als sogenannte "Funktions-Module" bezeichnet. Ein Funktions-Modul ist somit die physische Ausgestaltung einer bestimmten, konkreten Anwendung.

Aus dem Stand der Technik sind verschiedene Tragwerk-Systeme und zum Teil auch Befestigungsmöglichkeiten für Funktions-Module an einem Tragwerk bekannt, siehe z.B. US 2016/0335929 A1, WO 2005/093161 A1 oder GB 2519562 A.

Es ist eine Aufgabe der Erfindung, eine verbesserte Möglichkeit der Befestigung eines oder mehrerer Funktionsmodule an einem Tragwerk bereitzustellen.

Diese Aufgabe wird mit einem eingangs erwähnten Verbindungsknoten dadurch gelöst, dass erfindungsgemäß an einer Innenseite der ersten Knoten-Schale zumindest ein Nutenstein sowie eine dem Nutenstein zugeordnete Befestigungsmutter angeordnet sind, und wobei in an dem Tragwerk befestigten Verbindungsknoten die Befestigungsmutter in die Nut eingreift, und wobei zumindest eine Befestigungsschraube vorgesehen ist, welche von einer Außenseite her die erste Knoten-Schale und den Nutenstein durchsetzt und mit der Befestigungsmutter verschraubbar ist, sodass durch Verschrauben der Befestigungsschraube mit der Befestigungsmutter die erste Knoten-Schale gegen das Tragwerk und der Nutenstein an die Außenseite der Nut angepresst ist, und wobei zumindest ein Befestigungselement vorgesehen ist, mittels welchem zumindest einen Befestigungselement die zweite Knoten-Schale mit der ersten Knoten-Schale verschraubbar ist.

Durch die erfindungsgemäße Ausgestaltung ist der Verbindungsknoten an dem Tragwerk lösbar fixierbar, insbesondere in im Prinzip beliebiger Höhe und unbehindert von anderen Verbindungsknoten, da er nicht von oben auf das Tragwerk aufgeschoben werden muss, sondern in der der gewünschten Höhe direkt montiert werden kann. Dadurch können einzelne Anwendungen, d.h. die entsprechenden Funktions-Module, jederzeit ohne mechanische Nacharbeit und unbeeinflusst von bereits montierten Funktions-Modulen, an dem Tragwerk befestigt oder entfernt werden.

Die Montage und Demontage der Verbindungsknoten an dem Mast kann somit ohne mechanische Bearbeitung und in beliebiger Lage erfolgen.

Die Knoten-Schalen sind voneinander getrennte Bauteil, die zu dem Verbindungsknoten zusammengesetzt werden können. Beispielsweise sind die Knoten-Schalen Knoten-Halbschalen. Unter der Innenseite einer Knoten-Schale wird jene Seite verstanden, welche in an dem Tragwerk befestigtem Zustand dem Tragwerk zugewandt ist.

Weitere, vorteilhafte Ausgestaltungen eines erfindungsgemäßen Verbindungsknotens, welche jede für sich oder in beliebiger Kombination realisiert sein können, sind im Folgenden beschrieben:
➢ Die Befestigungsmutter kann derart ausgebildet sein, dass sie von der Außenseite in die Nut eingesetzt werden kann, und durch Verdrehen in der Nut, z.B. um 90°, gegen ein horizontales Herausbewegen aus der Nut gesichert ist. Dies ermöglicht ein einfaches Anbringen (oder Entfernen) des Verbindungsknotens an (bzw. von dem) Tragwerk, bei gleichzeitig stabiler Befestigung des angebrachten Verbindungsknotens.
➢ An einer Innenseite der zweiten Knoten-Schale können zumindest ein Nutenstein sowie eine dem Nutenstein zugeordnete Befestigungsmutter vorgesehen sein, wobei in an dem Tragwerk befestigten Verbindungsknoten die Befestigungsmutter in eine weitere Nut eingreift, und wobei zumindest eine Befestigungsschraube vorgesehen ist, welche von der Außenseite her die zweite Knoten-Schale und den Nutenstein durchsetzt und mit der Befestigungsmutter verschraubbar ist, sodass durch Verschrauben der Befestigungsschraube mit der Befestigungsmutter die zweite Knoten-Schale gegen das Tragwerk und der Nutenstein an die Außenseite der Nut anpressbar ist.
➢ An der Innenseite der ersten und/oder der Innenseite der zweiten Knoten-Schale können jeweils zumindest zwei, vorzugsweise jeweils genau zwei Befestigungsmuttern vorgesehen sein, wobei die zumindest zwei Befestigungsmuttern einer Knoten-Schale vorzugsweise in vertikaler Richtung übereinander liegend angeordnet sind.
➢ Die Nuten für die Befestigungsmutter der ersten Knoten-Schale und die zweite Knoten-Schale können an dem Tragwerk einander gegenüberliegend angeordnet sein.
➢ Zwischen dem Verbindungsknoten und dem Tragwerk kann ein Keilstück vorgesehen sein, welches mit dem Verbindungsknoten mit einem oder mehreren Verbindungselementen, z.B. einer oder mehreren Schrauben verbindbar ist, sodass das Keilstück an einer Außenseite des Tragwerkes, welche keine Nut aufweist, anliegt, wobei vorzugsweise eine Außenseite ohne Nut oder der Bereich der Außenseite ohne Nut eben ausgebildet ist. Vorzugsweise ist dabei vorgesehen, dass das Keilstück eine der Außenseite des Tragwerkes zugewandte, vorzugsweise ebene Außenseite aufweist.
➢ An der ersten Knoten-Schale können ein oder mehrere Ausleger angebracht sein, beispielsweise einstückig mit der ersten Knoten-Halbschale ausgebildet sein und/oder es können an der zweiten Knoten-Schale ein oder mehrere Ausleger angebracht, beispielsweise einstückig mit der zweiten Knoten-Halbschale ausgebildet sein.

Weiters wird die eingangs genannte Aufgabe mit einem Funktions-Modul gelöst, welches einen oder mehrere erfindungsgemäße Verbindungsknoten zur Befestigung des Funktions-Moduls an einem Tragwerk umfasst.

Schließlich wird die Aufgabe noch mit einem eingangs genannten Tragwerk-System, insbesondere einem modular erweiterbaren Tragwerk-System, mit einem Tragwerk, beispielsweise aus Stahl oder Aluminium, wobei das Tragwerk im Wesentlichen in vertikaler Richtung verläuft, und beispielsweise in Form eines stehenden Mastes ausgebildet ist, gelöst, wobei erfindungsgemäß zur Befestigung eines Funktions-Moduls ein erfindungsgemäßer Verbindungsknoten vorgesehen ist oder mehrere erfindungsgemäße Verbindungskoten vorgesehen sind.

Beispielsweise weist das Tragwerk zumindest eine Außenseite auf, welche zumindest bereichsweise oder über die gesamte Höhe des Tragwerkes keine Nut aufweist.

Vorzugsweise sind die Außenseite ohne Nut oder der Bereich bzw. die Bereich einer Außenseite ohne Nut eben ausgebildet.

Das Tragwerk ist vorzugsweise hohl ausgebildet und kann an zumindest einer Innenseite eine vertikal verlaufende Führung, beispielsweise in Form einer Nut, aufweisen.

Vorzugsweise erstreckt sich die vertikal verlaufende Führung im Wesentlichen über die gesamte Höhe des Tragwerks.

Die zumindest eine Nut und/oder die Führung ist/sind beispielsweise C-förmig, z.B. als C-Schiene, ausgebildet.

Im Folgenden ist die Erfindung an Hand von nicht einschränkenden Beispielen näher erörtert. Es zeigt
Fig. 1 eine perspektivische Ansicht eines Tragwerk-Systems mit verschiedenen Funktions-Modulen,
Fig. 2 eine Ausschnitts-Darstellung eines Tragwerks eines Tragwerk-Systems,
Fig. 3 vier verschiedene Ausgestaltungen eines Verbindungsknotens zur Befestigung von Funktionsmodulen an einem Tragwerk,
Fig. 4 eine Darstellung analog zu Figur 2 in vergrößerter Ansicht,
Fig. 4a eine Seitenansicht des in Figur 4 dargestellten Ausschnittes,
Fig. 4b einen Schnitt durch das Tragwerk aus Figur 4 bzw. 4a mit angedeuteter Befestigung eines Verbindungsknotens,
Fig. 5 einen beispielhaften Verbindungsknoten in auseinander genommenem Zustand,
Fig. 6 der Verbindungsknoten aus Figur 5 vor dem Befestigen an einem Tragwerk in einer ersten Position,
Fig. 7 der Verbindungsknoten aus Figur 5 vor dem Befestigen an einem Tragwerk in einer zweiten Position,
Fig. 8 ein weiteres Beispiel eines erfindungsgemäßen Verbindungsknotens,
Fig. 9 der Verbindungsknoten aus Figur 8 vor dem Befestigen an einem Tragwerk in einer ersten Position, und
Fig. 10 schematisch ein Tragwerk samt Ausschnitt.

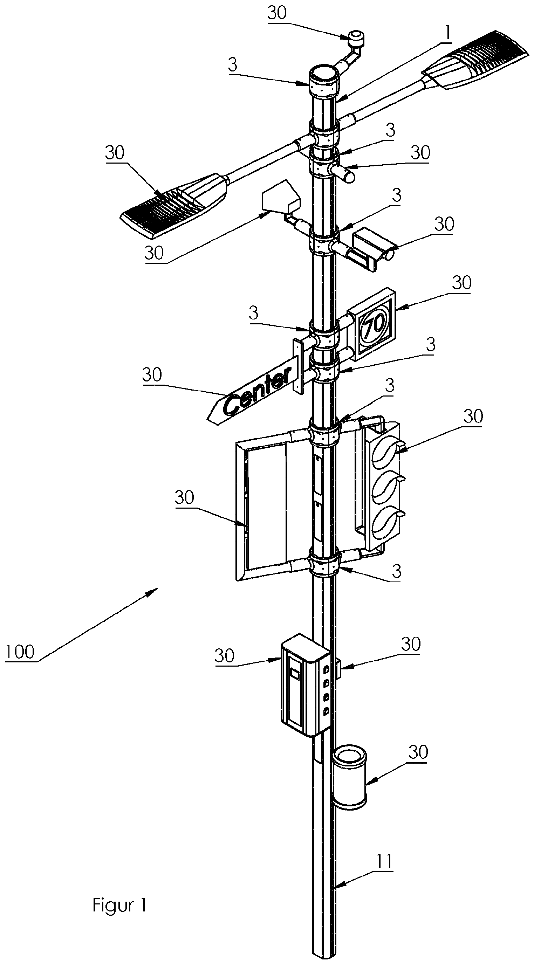

Figur 1 zeigt ein Tragwerk-System 100 mit einem Tragwerk 1 in Form eines stehenden Mastes, an welchem mehrere unterschiedliche Funktionsmodule 30 befestigt sind. Die Befestigung der Funktionsmodule 30 erfolgt mittels Verbindungsknoten 3, wobei vorgesehen sein kann, dass ein Funktions-Modul 30 mit genau einem Verbindungsknoten 3 an dem Mast 1 befestigt ist, es können mit einem Verbindungsknoten 3 aber auch zwei oder mehrere Funktions-Module an dem Mast befestigt werden. Prinzipiell ist es auch denkbar, dass zur Befestigung eines Funktions-Moduls, etwa in Folge von hohem Gewicht des Funktions-Moduls, zwei oder mehrere Verbindungsknoten zur Befestigung von einem FunktionsModul verwendet werden.

Bei den Funktionsmodulen 30 kann es sich um verschiedenste Anwendungen handeln, beispielsweise um Richtungsanzeiger, Anzeigetafeln, Ampeln, Windsensoren, Kameras, Lautsprecher, Straßenbeleuchtungen, Notbeleuchtungen, SOS-Notfallknopf, elektrische Ladestationen etwa für E-Cars, E-Bikes, mobile Endgeräte, etc.

Der Mast 1 ist am Boden stehend befestigt und ragt üblicherweise in vertikaler Richtung auf, der Mast 1 kann z.B. aus, etwa Stahl oder Aluminium gebildet sein

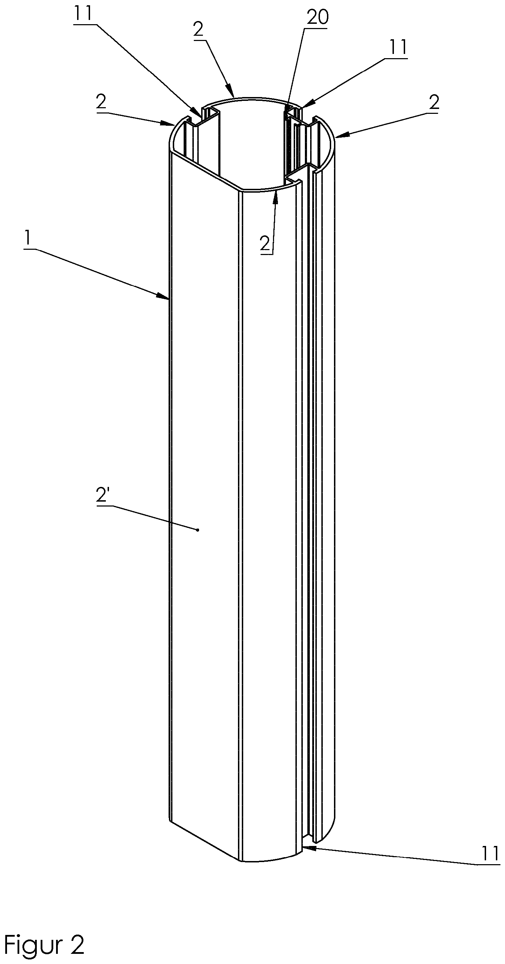

Figur 2 zeigt einen Abschnitt eines beispielhaften Mastes 1. In diesem Beispiel weist der Mast 1 vier Außenseiten 2, 2' auf, wobei an drei Seiten, nämlich an der Außenseite 2, jeweils eine vertikal verlaufende Nut 11 angeordnet ist. Die Außenseite 2' weist keine Nut auf und ist vorzugsweise flach ausgebildet.

In dem gezeigten Beispiel ist weiters optional an einer Innenseite eine vertikal verlaufende Führung 20 vorgesehen. Diese innenliegende Führung 20 ist am Mast vorzugsweise durchgehend ausgeführt und dient einerseits zur Befestigung von diversen Komponenten, wobei diese z.B. mittels Kunststoffgleitmuttern in der Führung befestigt werden und andererseits als Anschluss einer Erdung/Potentialausgleich z.B. mittels Metallgleitmuttern.

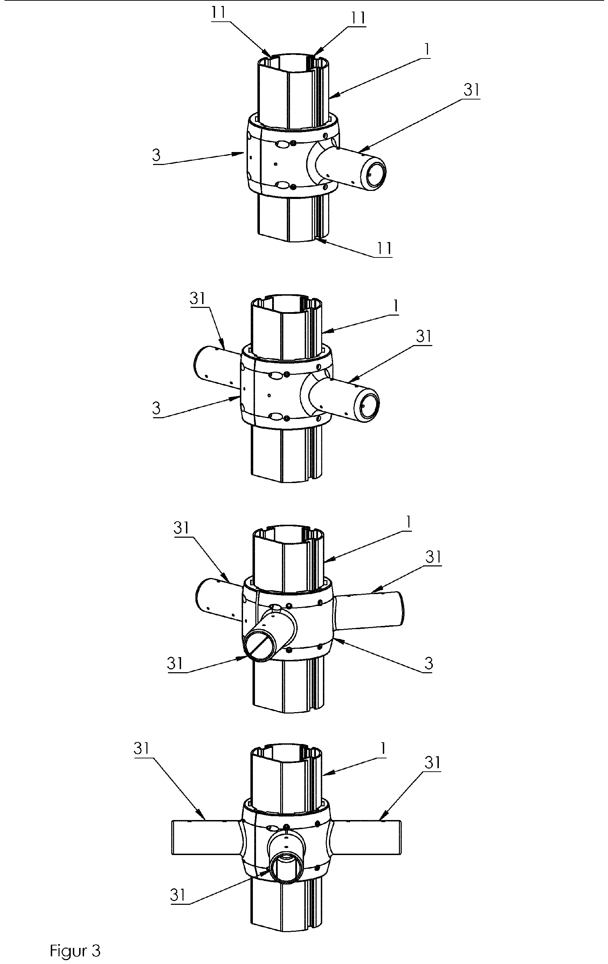

Figur 3 zeigt vier unterschiedliche Arten von Verbindungsknoten 3 in an einem Tragwerk 1 befestigten Verbindungsknoten 3. Wie zu erkennen ist, besteht jeder Verbindungsknoten 3 aus zwei Knoten-Schalen, insbesondere Knotenhalbschalten, welche das Tragwerk 1 von zwei Seiten umgreifen, und welche aneinander befestigt sind, sodass der Verbindungsknoten 3 an dem Tragwerk 1 hält. Diese Funktion wird in weiterer Folge noch im Detail erläutert.

Insbesondere zeigt Figur 3, dass an einem Verbindungsknoten ein oder mehrere Ausleger 31 angebracht sind. Insbesondere sind der oder die Ausleger 31 mit dem Verbindungsknoten einstückig, vorzugsweise aus demselben Material gebildet.

Z.B. weist der Verbindungsknoten 3 genau einen Ausleger auf, der an einer Knotenschale befestigt ist, der nächste Verbindungsknoten weist zwei Ausleger, je einen pro Schale auf. Der dritte Verbindungknoten weist zwei Ausleger an einer Knotenschale auf, während der vierte Verbindungsknoten an einer Knotenschale einen und an der anderen Knotenschale sichtbar zwei Ausleger aufweist.

Die Ausleger 31 dienen zur Befestigung von Funktions-Modulen, wie dies in Figur 1 gezeigt ist.

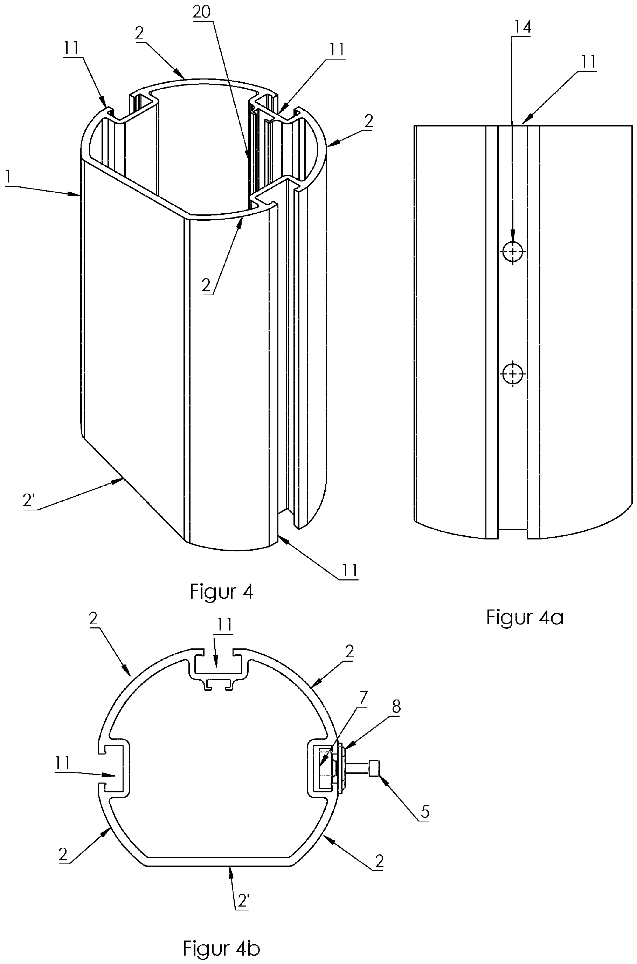

Die Figuren 4, 4a und 4b zeigen im Detail einen Ausschnitt eines Tragwerkes 1, wobei wie in Figur 4a gezeigt vorzugsweise fixe Durchführungen 14 im Bereich einer Nut 11 vorgesehen sein können. Durch diese fixen Durchführungen 14 können z.B. Kabel aus dem Innenraum des Tragwerkes 1, das vorzugweise wie gezeigt innen hohl ist, nach Außen in den oder die Verbindungsknoten 3 geführt werden, über welche sie - vorzugsweise durch das Innere des Verbindungsknotens - zu dem oder den Funktionsmodulen geführt werden. Auf diese Weise können die Funktionsmodule mit Energie versorgt werden und/und es kann eine Datenverbindung durchgeführt werden. Durch das fixe Vorsehen von solchen Durchführungen 14 ist es nicht notwendig, das Tragwerk 1 im Nachhinein mechanisch, etwas mittels Bohren zu bearbeiten.

Figur 4b zeigt bereits im Vorgriff auf die weitere Beschreibung die Funktionsweise der Befestigung eines Verbindungsknotens an dem Tragwerk mittels Nutenstein 8 und Befestigungsmutter 7.

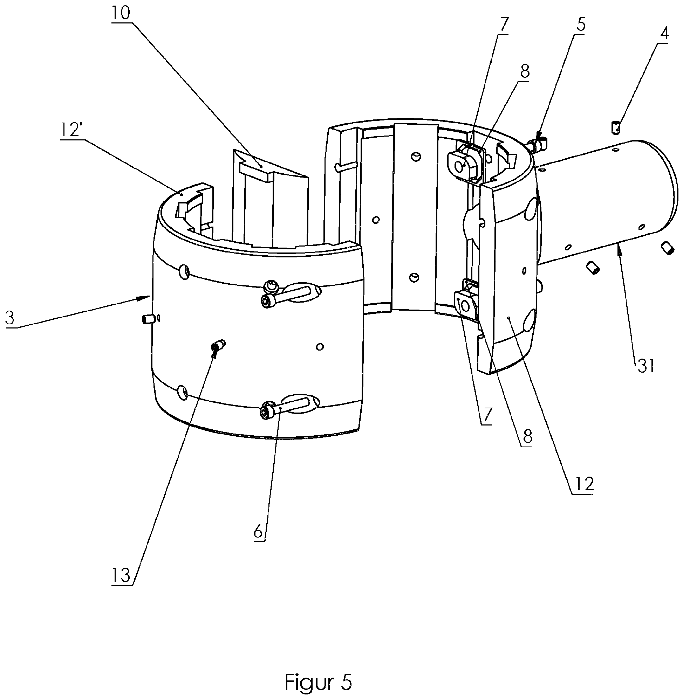

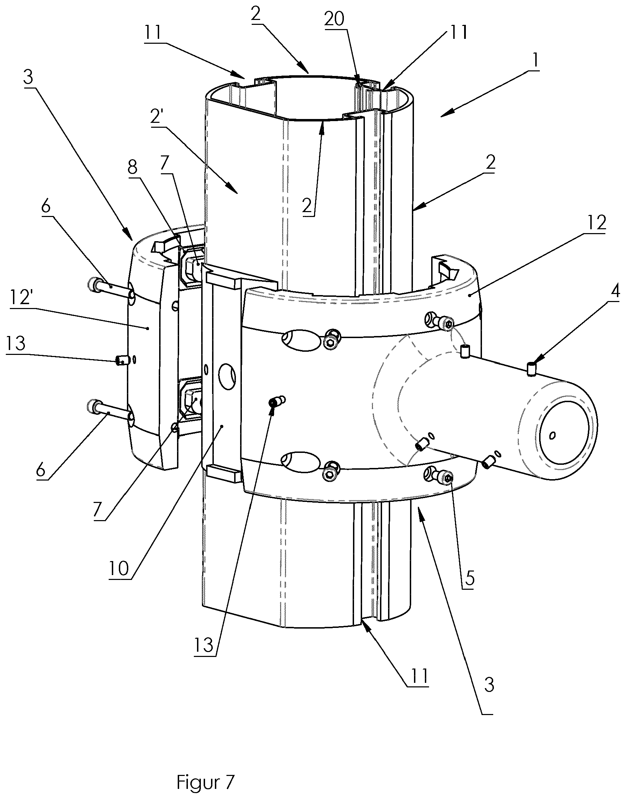

Figur 5 zeigt eine Ausführungsform eines Verbindungsknotens 3, welcher aus zwei KnotenSchalen 12, 12', insbesondere Halbschalen, einer ersten Knoten-Schale 12 und einer zweiten Knoten-Schale 12' gebildet ist, welche an dem Tragwerk 1, dieses von zwei Seiten umgreifend, angebracht werden können, siehe Figur 7. Der gezeigte Verbindungsknoten 3 weist einen Ausleger 31 an der ersten Knoten-Schale 12 auf.

An einer Innenseite der ersten Knoten-Schale 12 ist zumindest ein Nutenstein 8 sowie eine dem Nutenstein 8 zugeordnete Befestigungsmutter 7 angeordnet sind, im konkreten Beispiel sind 2 solcher Muttern 7 und zugeordneter Nutensteine 8 vorgesehen, die vorzugsweise übereinander in vertikaler Richtung gesehen angeordnet sind.

Bei einem Befestigen an dem Tragwerk greifen die Befestigungsmuttern 7 in die Nut 11 ein, sehe dazu auch Figur 4c. Weiters ist zumindest eine Befestigungsschraube 5 pro Mutter 7/Nutenstein 8 vorgesehen, welche von einer Außenseite her die erste Knoten-Schale 12 (z.B. über eine entsprechende Bohrung) und den Nutenstein 8 durchsetzt und mit der Befestigungsmutter 7 verschraubbar ist, sodass durch Verschrauben der Befestigungsschraube 5 mit der Befestigungsmutter 7 die erste Knoten-Schale 12 gegen das Tragwerk 1 und der jeweilige Nutenstein 8 an die Außenseite der Nut 11 angepresst wird. Vorzugsweise weist die Befestigungsschraube 5 ein verdicktes Ende, insbesondere eine Schraubenkopf auf, sodass die Schraube 5 stabil an der Knoten-Schale 12 anliegt, sobald sie mit der Mutter 7 entsprechend verschraubt ist.

Weiters sind Befestigungselemente 6, z.B. Schrauben vorgesehen, mittels welchen zumindest die zweite Knoten-Schale 12' mit der ersten Knoten-Schale 12 verschraubbar ist.

Vorzugsweise ist jede Befestigungsmutter 7 derart ausgebildet ist, dass sie von der Außenseite her in die Nut 11 eingesetzt werden kann, und durch Verdrehen in der Nut 11, z.B. um 90°, gegen ein horizontales Herausbewegen aus der Nut 11 gesichert ist, sobald sie mit ihrer Knoten-Schale 12 verschraubt ist.

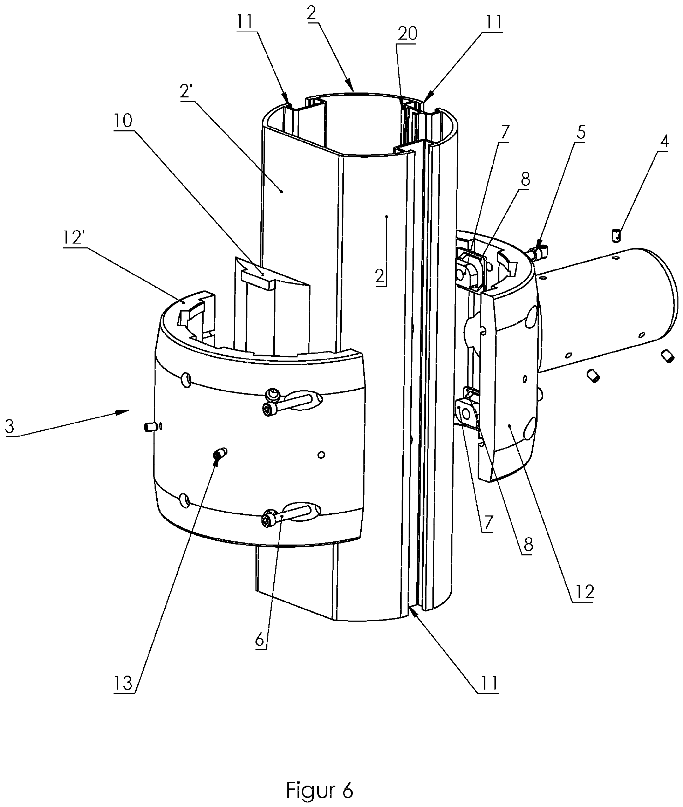

Der in Figur 5 gezeigte Verbindungsknoten 3 ist zur Befestigung an einem Tragwerk 1 wie in Figur 6 gezeigt vorgesehen, wozu an der zweiten Knoten-Halbschale 12', anderen Innenseite, ein Keilstück 10 vorgesehen ist, welches mit der zweiten Knoten-Schale 12' mittels einer oder mehrerer Schrauben 13 verbindbar ist, sodass das Keilstück 10 an einer Außenseite 2' des Tragwerkes 1, welche keine Nut aufweist, anliegt.

Vorzugsweise ist diese Außenseite 2' ohne Nut eben ausgebildet, entsprechend ist auch die der Außenseite 2' zugewandte Fläche des Keilstückes 10 eben ausgebildet, sodass sich eine stabile Anlage des Verbindungsknotens 3 an dem Tragwerk ergibt.

Figur 7 zeigt einen Verbindungsknoten, welcher im Vergleich zu der Situation in Figur 6 um 90° verdreht an dem Tragwerk 1 befestigt wird. In diesem Fall sind sowohl an der Innenseite der ersten als auch an der Innenseite der zweiten Knoten-Schale 12, 12' Muttern 7 und Nutensteine 8 vorgesehen, die wie an Hand von Figur 5, 6 und 4c erläutert jeweils in entsprechende, in diesem Fall einander an dem Tragwerk 1 gegenüberliegende Nuten 11 eingreifen und dort wie beschrieben den Verbindungsknoten 3 fixieren. Die Befestigungsschrauben zur Verschraubung der Befestigungsmuttern 7 der zweiten KnotenSchale 12' sind hier mit dem Bezugszeichen 6 versehen.

In diesem Beispiel ist ein Keilstück 10 vorgesehen, welches zwischen beiden Halb-Schalen 12, 12' und der flachen Außenseite 2' des Tragwerkes liegt. Das Keilstück ist mit Schrauben 13 mit den beiden Halb-Schalen 12, 12' verschraubt.

Generell zu erwähnen sind noch symbolische dargestellte Befestigungselemente 4, mittels welcher ein Funktionsmodul an einem Ausleger 31 befestigt werden kann.

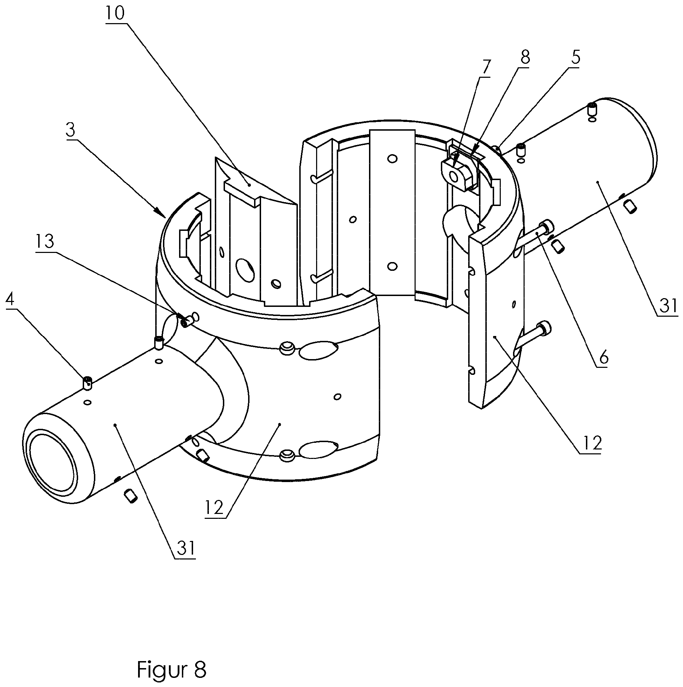

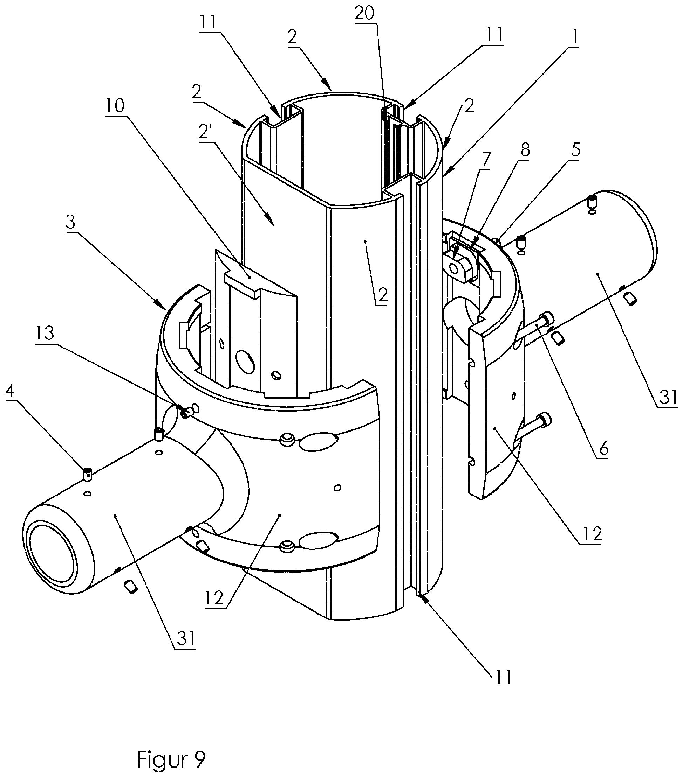

Figur 8 zeigt einen Verbindungsknoten 3, der an beiden Knoten-Schalen 12, 12' einen Ausleger 31 aufweist. Außerdem ist hier in der ersten Knoten-Schale 12 nur eine Befestigungsmutter 7/Nutenstein 8 vorgesehen. Figur 9 zeigt den Verbindungsknoten 8 während des Befestigens an dem Tagwerk 1.

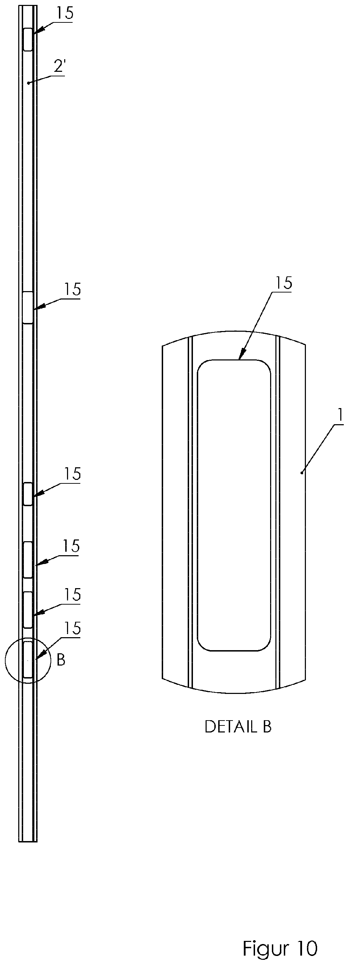

Figur 10 zeigt schließlich noch schematisch das Tragwerk 1 mit Blick auf die Außenseite 2' ohne Nut. Auf dieser Außenseite 2' können ein oder mehrere, vorzugsweise flächenbündige, Türen 15 vorgesehen sein, über welche diverse Komponenten in das Tragwerk 1 eingebunden, insbesondere im Inneren des Tragwerkes 1 untergebracht werden können.

## Patentansprüche

1. Verbindungsknoten (3) zur Befestigung, insbesondere zur lösbaren Befestigung eines oder mehrerer Funktionsmodule (30) an einem Tragwerk (1), wobei das Tragwerk (1) im Wesentlichen in vertikaler Richtung verlaufend ausgebildet ist, beispielsweise in Form eines stehenden Mastes, und wobei an zumindest einer Außenseite (2) des Tragwerkes (1) eine vertikal verlaufende Nut (11) vorgesehen ist, wobei
der Verbindungsknoten (3) zwei Knoten-Schalen (12, 12'), eine erste Knoten-Schale (12) und eine zweite Knoten-Schale (12') umfasst, welche an dem Tragwerk (1), insbesondere dieses von zwei Seiten umgreifend, angebracht werden können,
**dadurch gekennzeichnet, dass**
an einer Innenseite der ersten Knoten-Schale (12) zumindest ein Nutenstein (8) sowie eine dem Nutenstein (8) zugeordnete Befestigungsmutter (7) angeordnet sind, sodass in an dem Tragwerk (1) befestigten Verbindungsknoten (3) die Befestigungsmutter (7) in die Nut (11) eingreifen kann, und wobei zumindest eine Befestigungsschraube (5) vorgesehen ist, welche von einer Außenseite her die erste Knoten-Schale (12) und den Nutenstein (8) durchsetzt und mit der Befestigungsmutter (7) verschraubbar ist, sodass durch Verschrauben der Befestigungsschraube (5) mit der Befestigungsmutter (7) die erste Knoten-Schale (12) gegen das Tragwerk (1) und der Nutenstein (8) an die Außenseite der Nut (11) angepresst werden können, und wobei zumindest ein Befestigungselement (6) vorgesehen ist, mittels welchem zumindest einen Befestigungselement (6) die zweite Knoten-Schale (12') mit der ersten Knoten-Schale (12) verschraubbar ist.

2. Verbindungsknoten nach Anspruch 1, wobei die Befestigungsmutter (7) derart ausgebildet ist, dass sie von der Außenseite in die Nut (11) eingesetzt werden kann, und durch Verdrehen in der Nut (11), z.B. um 90°, gegen ein horizontales Herausbewegen aus der Nut (11) gesichert ist.

3. Verbindungsknoten nach Anspruch 1 oder 2, wobei an einer Innenseite der zweiten Knoten-Schale (12') ebenfalls zumindest ein Nutenstein (8) sowie eine dem Nutenstein (8) zugeordnete Befestigungsmutter (7) vorgesehen sind, wobei in an dem Tragwerk (1) befestigten Verbindungsknoten (3) die Befestigungsmutter (7) in eine weitere Nut (11) eingreifen kann, und wobei zumindest eine Befestigungsschraube (5) vorgesehen ist, welche von der Außenseite her die zweite Knoten-Schale (12') und den Nutenstein (8) durchsetzt und mit der Befestigungsmutter (7) verschraubbar ist, sodass durch Verschrauben der Befestigungsschraube (5) mit der Befestigungsmutter (7) die zweite Knoten-Schale (12') gegen das Tragwerk (1) und der Nutenstein (7) an die Außenseite (8) der Nut (11) anpressbar ist.

4. Verbindungsknoten nach einem der Ansprüche 1 bis 3, wobei an der Innenseite der ersten und/oder der Innenseite der zweiten Knoten-Schale (12, 12') jeweils zumindest zwei, vorzugsweise jeweils genau zwei Befestigungsmuttern (7) vorgesehen sind, wobei die zumindest zwei Befestigungsmuttern (7) einer Knoten-Schale (12, 12') vorzugsweise in vertikaler Richtung übereinander liegend angeordnet sind.

5. Verbindungsknoten nach einem der Ansprüche 3 oder 4, wobei die Nuten (11) für die Befestigungsmutter (7) der ersten Knoten-Schale (12) und die zweite Knoten-Schale (12') an dem Tragwerk (1) einander gegenüberliegend angeordnet werden können.

6. Verbindungsknoten nach einem der Ansprüche 1 bis 5, wobei zwischen dem Verbindungsknoten (12) und dem Tragwerk (1) ein Keilstück (10) vorgesehen sein kann, welches mit dem Verbindungsknoten (12) mit einem oder mehreren Verbindungselementen, z.B. einer oder mehreren Schrauben (13) verbindbar ist, sodass das Keilstück (10) an einer Außenseite (2') des Tragwerkes, welche keine Nut aufweist, anliegen kann, wobei vorzugsweise eine Außenseite (2') ohne Nut oder der Bereich der Außenseite ohne Nut eben ausgebildet ist.

7. Verbindungsknoten nach Anspruch 6, wobei das Keilstück (10) eine ebene Außenseite aufweist.

8. Verbindungsknoten nach einem der Ansprüche 1 bis 7, wobei an der ersten KnotenSchale (12) ein oder mehrere Ausleger (31) angebracht, beispielsweise einstückig mit der ersten Knoten-Halbschale (12) ausgebildet sind und/oder an der zweiten Knoten-Schale (12') ein oder mehrere Ausleger (31) angebracht, beispielsweise einstückig mit der zweiten Knoten-Halbschale (12') ausgebildet sind.

9. Funktions-Modul (30), welches einen oder mehrere Verbindungsknoten nach einem der Ansprüche 1 bis 8 zur Befestigung des Funktions-Moduls (30) an einem Tragwerk (1) umfasst.

10. Tragwerk-System (100), insbesondere modular erweiterbares Tragwerk-System (100), mit einem Tragwerk (1), beispielsweise aus Stahl oder Aluminium, wobei das Tragwerk (1) im Wesentlichen in vertikaler Richtung verläuft, und beispielsweise in Form eines stehenden Mastes ausgebildet ist, wobei an zumindest einer Außenseite des Tragwerkes (1) eine vertikal verlaufende Nut (11) vorgesehen ist, und wobei an dem Tragwerk (1) ein oder mehrere Funktions-Module (30) befestigbar oder befestigt sind,
**dadurch gekennzeichnet, dass**
zur Befestigung eines Funktions-Moduls (30) ein Verbindungsknoten (3) nach einem der Ansprüche 1 bis 8 vorgesehen ist oder mehrere Verbindungskoten (3) nach einem der Ansprüche 1 bis 8 vorgesehen sind.

11. Tragwerk-System Anspruch 10, wobei das Tragwerk (1) zumindest eine Außenseite (2') aufweist, welche zumindest bereichsweise oder über die gesamte Höhe des Tragwerkes (1) keine Nut aufweist.

12. Tragwerk-System nach Anspruch 10 oder 11, wobei die Außenseite (12') ohne Nut oder der Bereich der Außenseite ohne Nut eben ausgebildet ist.

13. Tragwerk-System nach einem der Ansprüche 10 bis 12, wobei das Tragwerk (1) hohl ausgebildet ist und an zumindest einer Innenseite eine vertikal verlaufende Führung (20), beispielsweise in Form einer Nut, aufweist.

14. Tragwerk-System nach einem der Anspruch 13, wobei sich die vertikal verlaufende Führung (20) im Wesentlichen über die gesamte Höhe des Tragwerks (1) erstreckt.

15. Tragwerk-System nach einem der Ansprüche 10 bis 14, wobei die zumindest eine Nut (11) und/oder die Führung (20) C-förmig, z.B. als C-Schiene, ausgebildet ist/sind.

## Claims

1. Connecting node (3) for fastening, in particular releasably fastening, one or more functional modules (30) to a supporting structure (1), the supporting structure (1) essentially extending in the vertical direction, for example realized as an upright mast, and wherein a groove (11) extending vertically is provided at at least one outer side (2) of the supporting structure (1), wherein
the connecting node (3) comprises two node shells (12, 12'), a first node shell (12) and a second node shell (12'), which can be attached to the supporting structure (1), in particular embracing it from two sides,
**characterized in that**
at least one slot nut (8) and a fastening nut (7) associated with the slot nut (8) are arranged at an inner side of the first node shell (12), so that in connecting nodes (3) fastened to the supporting structure (1) the fastening nut (7) can engage the slot (11), and wherein at least one fastening screw (5) is provided which traverses the first node shell (12) and the slot nut (8) from an outer side and is configured to be screwed to the fastening nut (7) enabling that screwing the fastening screw (5) to the fastening nut (7) presses the first node shell (12) against the supporting structure (1) and the slot nut (8) against the outside of the slot (11), and wherein at least one fastening element (6) is provided, by means of which at least one fastening element (6) the second node shell (12') can be screwed to the first node shell (12).

2. Connecting node according to claim 1, wherein the fastening nut (7) is configured such that it is insertable into the groove (11) from the outside and, by being rotated within the groove (11), e.g. by 90°, is secured against being removed from the groove (11) along the horizontal direction.

3. Connecting node according to claim 1 or 2, wherein at an inner side of the second node shell (12') also at least one slot nut (8) and a fastening nut (7) associated with the slot nut (8) are provided, wherein in connecting nodes (3) fastened to the supporting structure (1) the fastening nut (7) can engage another groove (11), and wherein at least one fastening screw (5) is provided which traverses the second node shell (12') and the slot nut (8) from the outside and is configured to be screwed to the fastening nut (7) enabling that screwing the fastening screw (5) to the fastening nut (7) presses the second node shell (12') against the supporting structure (1) and the slot nut (7) against the outside (8) of the slot (11).

4. Connecting node according to any one of claims 1 to 3, wherein at the inner side of the first and/or the inner side of the second node shell (12, 12') at least two, preferably respectively exactly two fastening nuts (7) are provided, wherein the at least two fastening nuts (7) of a node shell (12, 12') are preferably arranged one above the other along the vertical direction.

5. Connecting node according to any one of claims 3 or 4, wherein the grooves (11) for the fastening nut (7) of the first node shell (12) and the second node shell (12') can be positioned opposite each other on the supporting structure (1).

6. Connecting node according to any one of claims 1 to 5, wherein a wedge component (10) may be provided between the connecting node (12) and the supporting structure (1), which component is connectable to the connecting node (12) using one or more connecting elements, e.g. one or more screws (13), so that the wedge component (10) can abut against an outer side (2') of the supporting structure which does not have a groove, wherein preferably an outer side (2') without a groove or the region of the outer side without a groove is realized flat.

7. Connecting node according to claim 6, wherein the wedge component (10) has a flat outer side.

8. Connecting node according to any one of claims 1 to 7, wherein one or more cantilevers (31) are attached to the first node shell (12), for example formed integrally with the first node half shell (12), and/or one or more cantilevers (31) are attached to the second node shell (12'), for example formed integrally with the second node half shell (12').

9. Functional module (30) comprising one or more connecting nodes according to any one of claims 1 to 8 for attaching the functional module (30) to a supporting structure (1).

10. Supporting structure system (100), in particular modularly expandable supporting structure system (100), including a supporting structure (1), for example made of steel or aluminum, the supporting structure (1) essentially extending in the vertical direction and being, for example, realized as an upright mast, wherein a groove (11) extending vertically is provided at at least one outer side of the supporting structure (1), and wherein one or more functional modules (30) are attached or attachable to the supporting structure (1),
**characterized in that**
for fastening a functional module (30), a connecting node (3) according to any one of claims 1 to 8 is provided or a plurality of connecting nodes (3) according to any one of claims 1 to 8 are provided.

11. Supporting structure system according to claim 10, wherein the supporting structure (1) has at least one outer side (2') which has no groove at least in regions or along the entire height of the supporting structure (1).

12. Supporting structure system according to claim 10 or 11, wherein the outer side (12') without groove or the region of the outer side without groove is flat.

13. Supporting structure system according to any one of claims 10 to 12, wherein the supporting structure (1) is hollow and has a guide (20) extending vertically, for example realized as a groove, on at least one inner side.

14. Supporting structure system according to claim 13, wherein the guide (20) extending vertically extends substantially over the entire height of the supporting structure (1).

15. Supporting structure system according to any one of claims 10 to 14, wherein the at least one groove (11) and/or the guide (20) is/are C-shaped, for example as a C-shape rail.

## Revendications

1. Nœud de raccordement (3) pour la fixation, en particulier pour la fixation amovible, d'un ou de plusieurs modules fonctionnels (30) à une structure porteuse (1), la structure porteuse (1) s'étendant essentiellement dans la direction verticale, par exemple sous forme d'un mât vertical, et une rainure (11) s'étendant verticalement étant prévue sur au moins un côté extérieur (2) de la structure porteuse (1),
le nœud de raccordement (3) comprend deux coques de nœud (12, 12'), à savoir une première coque de nœud (12) et une deuxième coque de nœud (12'), qui peuvent être accrochées à la structure porteuse (1), en particulier en l'entourant de deux côtés,
**caractérisé en ce que**
à un côté intérieur de la première coque de nœud (12) sont disposés au moins un coulisseau (8) ainsi qu'un écrou de fixation (7) associé au coulisseau (8), de sorte que dans des nœuds de raccordement (3) fixés à la structure porteuse (1), l'écrou de fixation (7) peut s'engager dans la rainure (11), et au moins une vis de fixation (5) étant prévue, qui traverse la première coque de nœud (12) et le coulisseau (8) d'un côté extérieur et est apte à être vissée avec l'écrou de fixation (7), de sorte que, par vissage de la vis de fixation (5) avec l'écrou de fixation (7), la première coque de nœud (12) peut être pressée contre la structure porteuse (1) et le coulisseau (8) peut être pressé contre le côté extérieur de la rainure (11), et au moins un élément de fixation (6) étant prévu, au moyen duquel au moins un élément de fixation (6) la deuxième coque de nœud (12') peut être vissée avec la première coque de nœud (12).

2. Nœud de raccordement selon la revendication 1, dans lequel l'écrou de fixation (7) est conçu tel qu'il peut être inséré dans la rainure (11) du côté extérieur et qu'il est empêché de se déplacer horizontalement hors de la rainure (11) par une rotation dans la rainure (11), par exemple de 90°.

3. Nœud de raccordement selon la revendication 1 ou 2, dans lequel à un côté intérieur de la deuxième coque de nœud (12') sont également prévu au moins un coulisseau (8) ainsi qu'un écrou de fixation (7) associé au coulisseau (8), et dans lequel dans des nœuds de raccordement (3) fixés à la structure porteuse (1), l'écrou de fixation (7) peut s'engager dans une autre rainure (11), et étant prévu au moins une vis de fixation (5), qui traverse du côté extérieur la deuxième coque de nœud (12') et l'écrou à encoches (8) et qui peut être vissée avec l'écrou de fixation (7), de sorte que, par vissage de la vis de fixation (5) avec l'écrou de fixation (7), la deuxième coque de nœud (12') peut être pressée contre la structure porteuse (1) et le coulisseau (7) contre le côté extérieur (8) de la rainure (11).

4. Nœud de raccordement selon l'une quelconque des revendications 1 à 3, dans lequel à la face intérieure de la première coque de nœud (12, 12') et/ou à la face intérieure de la deuxième coque de nœud (12, 12') respectivement au moins deux écrous de fixation (7), de préférence exactement deux écrous de fixation (7) respectifs, sont prévus, lesdits au moins deux écrous de fixation (7) d'une coque de nœud (12, 12') étant de préférence disposés l'un au-dessus de l'autre dans la direction verticale.

5. Nœud de raccordement selon l'une quelconque des revendications 3 ou 4, dans lequel les rainures (11) pour l'écrou de fixation (7) de la première coque de nœud (12) et la deuxième coque de nœud (12') peuvent être disposées en vis-à-vis à la structure porteuse (1).

6. Nœud de raccordement selon l'une quelconque des revendications 1 à 5, dans lequel entre le nœud de raccordement (12) et la structure porteuse (1) une cale (10) peut être prévu qui peut être reliée au nœud de raccordement (12) par un ou plusieurs éléments de raccordement, par exemple une ou plusieurs vis (13), de sorte que la cale (10) peut s'appliquer contre une face extérieure (2') de la structure porteuse qui ne présente pas de rainure, dans laquelle de préférence une face extérieure (2') sans rainure ou la zone de la face extérieure sans rainure est plane.

7. Nœud de raccordement selon la revendication 6, dans lequel la cale (10) présente une face extérieure plane.

8. Nœud de raccordement selon l'une quelconque des revendications 1 à 7, dans lequel un ou plusieurs bras (31) sont installés à la première coque de nœud (12), par exemple formés d'un seul tenant avec la première demi-coque de nœud (12), et/ou un ou plusieurs bras (31) sont montés à la deuxième coque de nœud (12'), par exemple formés d'un seul tenant avec la deuxième demi-coque de nœud (12').

9. Module fonctionnel (30) comportant un ou plusieurs nœuds de raccordement selon l'une quelconque des revendications 1 à 8 pour la fixation du module fonctionnel (30) à une structure porteuse (1).

10. Système de structure porteuse (100), en particulier système de structure porteuse (100) extensible de façon modulaire, avec une structure porteuse (1), par exemple en acier ou en aluminium, la structure porteuse (1) s'étendant essentiellement dans la direction verticale et étant réalisée par exemple sous forme d'un mât vertical, une rainure (11) s'étendant verticalement étant prévue sur au moins un côté extérieur de la structure porteuse (1), et un ou plusieurs modules fonctionnels (30) étant fixés ou apte à être fixés à la structure porteuse (1),
**caractérisé en ce que**
pour la fixation d'un module fonctionnel (30), un nœud de raccordement (3) selon l'une quelconque des revendications 1 à 8 est prévu ou plusieurs nœuds de raccordement (3) selon l'une quelconque des revendications 1 à 8 sont prévu.

11. Système de structure porteuse revendication 10, dans lequel la structure porteuse (1) comporte au moins une face extérieure (2') qui ne présente pas de rainure au moins par endroits ou sur toute la hauteur de la structure porteuse (1).

12. Système de structure porteuse selon la revendication 10 ou 11, dans lequel la face extérieure (12') sans rainure ou la zone de la face extérieure sans rainure est plane.

13. Système de structure porteuse selon l'une quelconque des revendications 10 à 12, dans lequel la structure porteuse (1) est creuse et présente à au moins une face intérieure un guidage (20) s'étendant verticalement, par exemple sous la forme d'une rainure.

14. Système de structure porteuse selon la revendication 13, dans lequel le guide (20) s'étendant verticalement s'étend sensiblement sur toute la hauteur de la structure porteuse (1).

15. Système de structure porteuse selon l'une quelconque des revendications 10 à 14, dans lequel ladite au moins une rainure (11) et/ou le guide (20) est/sont en forme de C, par exemple sous la forme d'un rail en C.
